# EUROPEAN PATENT APPLICATION

(11) **EP 2 680 410 A1**
(43) Date of publication of application: **01.01.2014**
(21) Application number: 11859572.7
(22) Date of filing: 21.02.2011
(51) Int. Cl.: H02K 11/00

(54) **MOTOR**

(71) Applicant: Hitachi, Ltd., Tokyo 100-8280 (JP)
(72) Inventor: YOKOYAMA Atsushi, Hitachinaka-shi Ibaraki 312-0034 (JP); SAWADA Itsuro, Hitachinaka-shi Ibaraki 312-0034 (JP)
(74) Representative: MERH-IP Matias Erny Reichl Hoffmann
(86) International application number: PCT/JP2011/053638
(87) International publication number: WO 2012/114419

(57) **Abstract**

A motor is provided which can detect a rotor temperature with high precision with a simple configuration not taking an influence on a temperature caused by circulation of a cooling oil into account. In a motor 100 including a rotor 1, a stator 2 arranged around the rotor 1, and a temperature sensor 30, the rotor 1 includes an oil reservoir unit 4 that reserves an oil P on a rotating shaft line L in an interior thereof, and the temperature sensor 30 detects a temperature of the oil P reserved in the oil reservoir unit 4.

## Description

### Technical Field

The present invention relates to a motor, and more particularly to a motor that can detect a rotor temperature with high precision.

### Background Art

In recent years, in a field of transport equipments such as an electric vehicle, a hybrid vehicle, and an electric train, the development of a motor that can achieve a high efficiency and a high torque with a reduction in size and weight has been rapidly advanced from the viewpoints of a reduction in an environmental load.

As an example of this motor, there is an IPM motor (interior permanent magnet motor) in which a magnet is embedded in an interior of a rotor. The IPM motor can use both of a reluctance torque caused by magnetization of the rotor and a torque caused by magnetization of the magnet, and the magnet is embedded in the interior of the rotor formed of a silicon steel plate. As a result, the magnet does not fall out to the external by a centrifugal force of the motor even during rotation of the motor, and an excellent safety is obtained. For that reason, a current phase is controlled to enable high torque operation and operation at an extensive speed.

Incidentally, in general, there has been known that in an induction motor using no magnet, when the motor is driven by an inverter circuit, an iron loss of a rotor is converted into a heat, a temperature of the rotor rises, and a motor torque is lessened. In particular, in the case of the IPM motor in which the magnet is embedded in the interior of the motor, a magnet temperature also rises in association with the temperature rise of the rotor. When the magnet temperature exceeds a limit temperature, the magnet is demagnetized to further lessen the motor torque. Also, there arises such a problem that even if the magnet thus demagnetized is cooled to return the magnet temperature to the limit temperature, a desired motor torque is not obtained.

Under the circumstances, in order to suppress a reduction in the torque of the motor attributable to the rise of the rotor temperature and a reduction in the efficiency caused by the torque reduction, there arises an urgent issue in this field to precisely measure the rotor temperature within the motor, and also the temperature of the magnet when the magnet is embedded in the rotor.

However, because the rotor per se rotates during driving of the motor, it is extremely difficult to measure the temperature of the rotor or the magnet within the rotor, for example, by cable. It is also conceivable to measure the temperature of the rotor, etc. by a non-contact thermometer such as a thermography. However, this makes the device configuration complicated and upsized, resulting in an increase in the manufacturing costs of the motor.

Under the circumstances, a technique of measuring the rotor temperature or the magnet temperature with the use of a cooling oil that is reflexed within the motor in order to cool the rotor is disclosed in PTL 1 and PTL 2. PTL 1 discloses a rotor temperature estimation method of measuring an inflow temperature of the cooling oil before being supplied to the rotor and an outflow temperature of the cooling oil after the rotor has been cooled, in reflexing the cooling oil within the motor, and estimating the rotor temperature on the basis of the inflow temperature, the outflow temperature, a thermal resistance of the rotor which has been obtained in advance, and a weight corresponding to an operating status of the rotor.

Also, PTL 2 discloses a magnet temperature estimation device and a method therefor, which estimate the magnet temperature by directly measuring the temperature of the cooling oil after the magnet has been cooled, which is emitted by a centrifugal force when rotationally driving the rotor.
PTL 1: JP-A-2000-23421
PTL 2: JP-A-2008-178243

### Summary of Invention

### Technical Problem

In the rotor temperature estimation method disclosed in PTL 1, because the rotor temperature or the magnetic temperature is estimated with the use of an arithmetic expression defined in advance, the operation of constructing a variable for the arithmetic operation is required. Also, in order to make an estimated value of the rotor temperature or the magnetic temperature, which is calculated according to the above arithmetic expression, approximate to a real temperature of the rotor or the magnet, there is a need to detect the states of the cooling oil such as the flow rate or flow velocity of the cooling oil, the inflow temperature of the cooling oil into the rotor, or the outflow temperature of the cooling oil from the rotor, with high precision.

Also, in the magnet temperature estimation device and the method therefor disclosed in PTL 2, the cooling oil temperature to be measured is changed by the flow rate of the cooling oil or the inflow temperature of the cooling oil into the rotor. For that reason, the rotor temperature or the magnet temperature to be estimated cannot be made to approximate to the real temperature without a complicated calculation taking the flow rate and the inflow temperature into account.

Thus, in both of the rotor temperature estimation methods disclosed in PTL 1 and PTL 2, there is a need to accurately grasp a circulation state of the cooling oil subjected to forced convection such as the flow velocity or the flow rate, and the temperature change when the cooling oil passes through the rotor. However, it is difficult to detect the state of the cooling oil with elaboration. Therefore, the rotor temperature or the magnet temperature cannot be measured with high precision.

The present invention has been made in view of the above problems, and an object of the present invention is to provide a motor that can detect the rotor temperature with high precision with a simple configuration not taking an influence on the temperature caused by the circulation of the cooling oil into account.

### Solution to Problem

In order to solve the above problem, according to the present invention, there is provided a motor, including a rotor, a stator arranged around the rotor, and a temperature sensor, in which the rotor includes an oil reservoir unit that reserves an oil on a rotating shaft line in an interior thereof, and the temperature sensor detects a temperature of the oil reserved in the oil reservoir unit.

According to the above configuration, since the rotor includes the oil reservoir unit for reserving the oil on the rotating shaft line, the reserved oil temperature can be detected by the temperature sensor, and a rotor temperature can be detected according to the oil temperature. As a result, the rotor temperature can be detected with high precision not taking an influence of an inflow temperature, the flow rate, and the flow velocity of the oil into account. Advantageous Effects of Invention

As understandable from the above description, according to the present invention, the rotor temperature can be easily detected with high precision by measuring a temperature of a fluid reserved in the reservoir unit within the rotor. In particular, in the case of a magnet motor in which a magnet is embedded within the rotor, a magnet temperature can be also calculated with high precision with the use of the detected rotor temperature, and the demagnetization of the magnet attributable to the temperature rise can be effectively suppressed.

The other problems, configurations and advantageous effects will become apparent from the following description of the embodiments.

### Brief Description of Drawings

[FIG. 1] FIG. 1 is a vertical cross-sectional view illustrating a motor according to a first embodiment of the present invention.
[FIG. 2] FIG. 2 is an enlarged diagram of an oil reservoir unit according to the first embodiment illustrated in FIG. 1, in which (a) shows a vertical cross-sectional view illustrating a relationship between an oil and a temperature sensor in a motor stop state, (b) shows a view taken along an arrow A-A of (a), (c) shows a vertical cross-sectional view illustrating a relationship between the oil and the temperature sensor in a motor drive state, and (d) shows a view taken along an arrow C-C of (c).
[FIG. 3] FIG. 3 is a vertical cross-sectional view illustrating a motor according to a second embodiment of the present invention.
[FIG. 4] FIG. 4 is a vertical cross-sectional view illustrating a motor according to a third embodiment of the present invention.
[FIG. 5] FIG. 5 is an enlarged diagram of an oil reservoir unit according to a third embodiment of the present invention, in which (a) shows a vertical cross-sectional view illustrating a relationship of an oil, a temperature sensor, and a continuous hole in a motor stop state, and (b) is a vertical cross-sectional view illustrating a relationship of the oil, the temperature sensor, and the continuous hole in a motor drive state.
[FIG. 6] FIG. 6 is a vertical cross-sectional view illustrating a motor according to a fourth embodiment of the present invention.

### List of Reference Signs

1, rotor
2, stator
3, coil
4, oil reservoir unit
6, oil seal
7, step
8, 19, oil supply path
9, magnet
10, gear
11, oil inflow path
12, inflow port
13, oil outflow path
14, outflow port
15, coupling path
16, continuous hole
17, partition
18, oil circulation path
19A, oil exhaust path
20, 60, motor cover
21, outside cap
22, inside cap
23, 63, bearing
24, inverter circuit
25, 65, rotating angle sensor
26, rotation control means
27, temperature calculation unit
28, substrate
29, 68, opening portion
30, temperature sensor
31, cylindrical portion
32, bottom portion
33, jaw portion
34, corner portion
35, housing
36, temperature detection unit
40, reducer
41, housing
42, oil storage chamber
43, gear
44, shaft
45, bearing
46, oil seal
47, oil pool
48, oil supply path,
51, motor case
52, water jacket
53, bearing
54, step
61, 62, oil seal
64, oil storage unit
69, oil exhaust path
100, 200, 300, 400, motor
A, continuous hole inner diameter
D, oil reservoir unit inner diameter
d, temperature sensor outer diameter
L, rotor rotating shaft line
P, PA, oil

### Description of Embodiments

Hereinafter, a motor according to embodiments of the present invention will described with reference to the drawings.

### [First Embodiment]

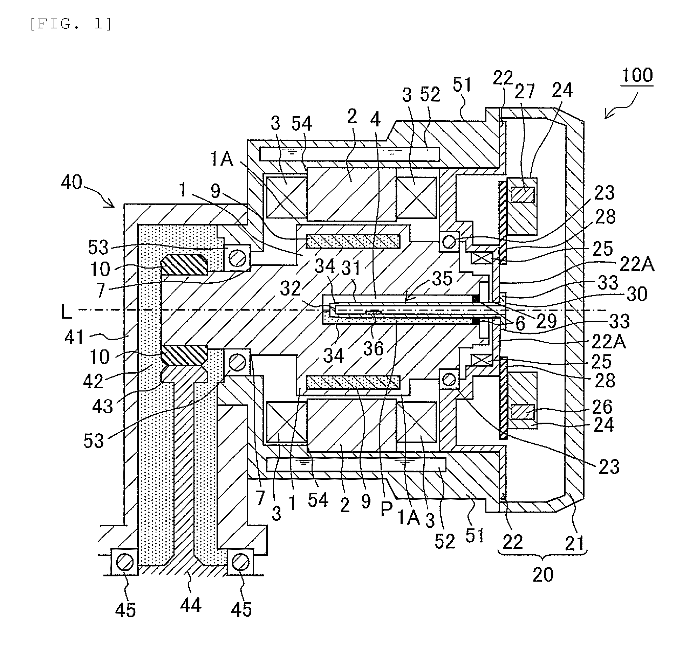

FIG. 1 illustrates a motor according to a first embodiment of the present invention. In the first embodiment, a configuration in which a magnet is embedded in an interior of a rotor will be described. However, the same configuration can be applied to a configuration in which no magnet is embedded in the interior of the rotor.

A motor 100 shown in the figure includes a rotor 1 and a stator 2 arranged around an outer peripheral surface 1A of the rotor 1, and a coil 3 is wound on the stator 2 in multiple turns, and the coil 3 is energized so that the rotor 1 is rotationally driven about a rotating shaft line L as a rotating center. A magnet 9 is embedded in an interior of the rotor 1 along the outer peripheral surface 1A thereof.

Also, a motor case 51 internally having a water jacket 52 which circulates a cooling water is disposed outside of the stator 2. With this configuration, an outer peripheral surface of the rotor 1 and the stator 2 can be protected from an external environment, and a heat radiated from the rotor 1 can be absorbed by the internal cooling water to cool the rotor 1 or the stator 2. Also, a motor cover 20 including an outside cap 21 and an inside cap 22 is disposed on one end side of the rotor 1 in the rotating shaft line L direction. A substrate 28 is disposed on a surface 22A of the inside cap 22 of the motor cover 20 facing the outside cap 21, and an inverter circuit 24 having a temperature calculation unit 27 that calculates a rotor temperature and a magnet temperature is placed on the substrate 28. The inverter circuit 24 further includes a rotation control unit 26 so as to control a rotating speed of the rotor 1 on the basis of a signal from a rotating angle sensor 25 disposed on the rotor 1 side of the inside cap 22 in order to detect the rotation of the rotor 1 and the rotor temperature and the magnet temperature calculated by the temperature calculation unit 27. Also, bearings 53 and 23 are disposed between the motor case 51 and the rotor 1, and between the inside cap 22 and the rotor 1, respectively, so that the rotor 1 can rotate relatively with respect to the motor case 51 and the inside cap 22.

An oil reservoir unit 4 for reserving an oil P on the rotating shaft line L of the rotor 1 is disposed on an end of the motor cover 20 side of the rotor 1. In this example, the oil reservoir unit 4 is formed into substantially a cylindrical shape coaxial with the rotating shaft line L of the rotor 1. Also, an opening portion 29 is formed substantially in the center (on the rotating shaft line L of the rotor 1) of the inside cap 22 of the motor cover 20. A temperature sensor 30 is inserted through the opening portion 29 along the rotating shaft line L, and fitted to the inside cap 22 by a jaw portion 33. The jaw portion 33 of the temperature sensor 30 is fixedly engaged with an outer peripheral portion of the opening portion 29 of the inside cap 22 so that the temperature sensor 30 is fixed to the inside cap 22. In this example, the temperature sensor 30 is formed into the substantially cylindrical shape coaxial with the rotating shaft line L of the rotor 1, as with the oil reservoir unit 4. As described above, the temperature sensor 30 is inserted along the rotating shaft line L, and fitted to the inside cap 22 by the jaw portion 33, as a result of which the entire temperature sensor 30 is inserted into the oil reservoir unit 4 along the rotating shaft line L without contact with the rotor 1. An outer diameter of the temperature sensor 30 is set to be relatively smaller than an inner diameter of the oil reservoir unit 4. As described above, the temperature sensor 30 formed into the substantially cylindrical shape on the rotating shaft line L of the rotor 1 is arranged without contact with an inner surface of the oil reservoir unit 4 having the substantially cylindrical shape. As a result, even if the rotor 1 rotates around the temperature sensor 30 in a state where the temperature sensor 30 is fixed to the motor cover 20, an inner peripheral surface of the oil reservoir unit 4 and an outer peripheral surface of the temperature sensor 30 do not contact with each other, and are not worn away.

Also, the oil P of a given amount is reserved in the oil reservoir unit 4, and the temperature sensor 30 and the oil P come in direct contact with each other at the time of stopping or driving the motor, and a heat is transmitted between the temperature sensor 30 and the rotor 1 through the oil P. That is, the heat radiated from the rotor 1 is transmitted to the oil P, and further transmitted to the temperature sensor 30 so that the temperature of the oil P is measured by the temperature sensor 30 to detect the temperature of the rotor 1. An oil seal 6 is interposed between the rotor 1 and the temperature sensor 30, and as shown in the figure, the temperature sensor 30 is fixed to the motor cover 20. Even if the rotor 1 rotates relatively with respect to the temperature sensor 30, the oil seal 6 can prevent the oil P within the oil reservoir unit 4 from being leaked out of the rotor 1.

The temperature sensor 30 is roughly configured by a housing 35 including a cylindrical portion 31 extending in the rotating shaft line L direction of the rotor 1 and a bottom portion 32 that closes one end of the cylindrical portion 31, and a temperature detection portion 36. The temperature detection portion 36 is fitted to the inner peripheral surface of the cylindrical portion 31, and an end of the housing 35 opposite to the bottom portion 32 is opened, and the temperature detection portion 36 is joined to the inverter circuit 24 through an opening portion of the opposite end by a conductive wire not shown. As a result, a detected signal of the temperature of the oil P, which is measured by the temperature detection portion 36, is transmitted to the temperature calculation unit 27 and the rotation control unit 26 within the inverter circuit 24, and used for calculation of the temperatures of the rotor 1 and the magnet 9, or for control of the rotating speed of the rotor 1. The temperature sensor 30 is formed into the cylindrical shape, and the temperature detection portion 36 is arranged inside thereof so that the temperature detection portion 36 and the oil P to be measured can be arranged in proximity to each other, and the temperature measurement with a high response and higher elaboration is enabled. The temperature detection portion 36 may be, for example, a thermistor or a thermocouple.

A reducer 40 is disposed on a side of the motor case 51 opposite to the motor cover 20 side. The reducer 40 is roughly configured by a housing 41 that demarcates an oil storage chamber 42, and a gear 43 that is disposed on a shaft 44 arranged within the housing 41. A gear 10 disposed on the end of the rotor 1 and the gear 43 are meshed with each other so that the rotating speed of the rotor 1 is reduced and transmitted to the shaft 44. A bearing 45 is disposed between the housing 41 and the shaft 44 so that the shaft 44 can rotate relatively with respect to the housing 41.

Subsequently, a procedure of assembling the motor 100 according to the first embodiment will be described.

First, the rotor 1 in which the magnet 9 is embedded along the outer peripheral surface 1A, and the stator 2 on which the coil 3 is wound are prepared. Also, the motor case 51 having the water jacket 52, and the bearing 53 fitted to the end opposite to the side to which the motor cover 20 is fitted is prepared. Then, the stator 2 is inserted into the motor case 51 from the side at which the motor cover 20 is fitted. In this situation, a step 54 formed on the inner peripheral surface of the motor case 51 is abutted against a corner of the stator 2 to position the stator 2 relative to the motor case 51. Then, the rotor 1 is inserted into the motor case 51 until a step 7 formed on the rotor 1 is abutted against the bearing 53.

Also, the motor cover 20 is prepared in another process different from the above process. That is, the substrate 28 is fitted to one surface 22A of the inside cap 22 of the motor cover 20, and the inverter circuit 24 having the temperature calculation unit 27 and the rotation control unit 26 is placed on the substrate 28. Also, the rotation sensor 25 and the bearing 23 are arranged on the other surface opposite to the one surface 22A of the inside cap 22. The opening portion 29 is formed substantially in the center of the inside cap 22, and the temperature sensor 30 is inserted through the opening portion 29 in the rotating shaft line L direction of the rotor 1, and fitted to the inside cap 22 by the jaw portion 33 on the end thereof. The rotation sensor 25 and the temperature sensor 30 are connected to the inverter circuit 24 by a conductive wire not shown. The outside cap 21 is fitted to the inside cap 22 so as to cover the one surface 22A of the inside cap 22, that is, the inverter circuit 24 to form the motor cover 20. As a method of fitting the outside cap 21 and the inside cap 22, there are a fitting method using a fitting claw, a fitting method using a fastening member such as a bolt or a screw, and a fitting method due to adhesion by using an adhesive.

After the motor cover 20 is thus installed, and the oil P of the desired amount is poured into the oil reservoir unit 4 of the rotor 1, the motor cover 20 is fitted to the motor case 51 along the rotating shaft line L so that a part of the temperature sensor 30 of the motor cover 20 is inserted into the oil reservoir unit 4. A corner 34 of a leading end of the temperature sensor 30 is tapered so that the temperature sensor 30 can be guided into the oil reservoir unit 4. Also, the oil seal 6 is arranged between the rotor 1 and the temperature sensor 30 on an end of the oil reservoir unit 4 of the rotor 1 so that the oil P is not leaked out of the rotor 1 from the oil reservoir unit 4 after the temperature sensor 30 is inserted into the oil reservoir unit 4.

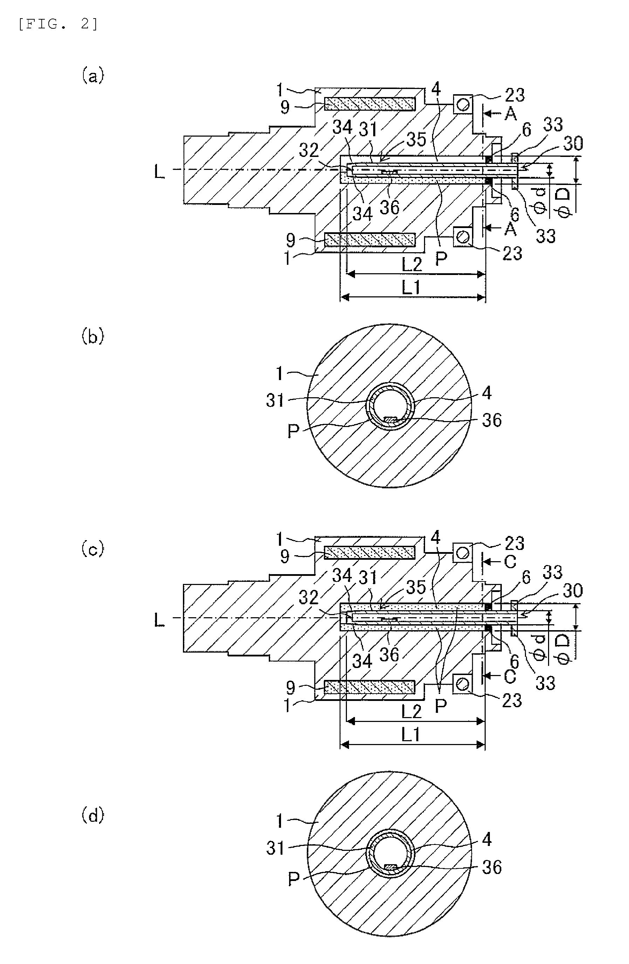

FIG. 2 illustrates a relationship between the oil P poured into the oil reservoir unit 4 and the temperature sensor 30 according to the first embodiment. FIG. 2(a) illustrates a motor stop state, FIG. 2(b) is a view taken along an arrow A-A of FIG. 2(a), FIG. 2(c) illustrates a motor drive state, and FIG. 2 (d) is a view taken along an arrow C-C of FIG. 2(c). In general, when the motor 100 of the first embodiment is applied to a vehicle, as illustrated in FIGS. 1 and 2, the motor 100 is fitted to the vehicle so that the rotating shaft line L of the rotor 1 becomes horizontal.

As illustrated in FIG. 2(a), when the motor 100 is arranged in the vehicle so that the rotating shaft line L of the rotor 1 becomes horizontal, the oil P pools in a lower portion of the oil reservoir unit 4 in the stop state of the motor 100. Even in the stop state of the motor 100, in order to detect the temperature of the rotor 1 by the temperature sensor 30, as illustrated in FIG. 2(b), there is a need to reserve the oil P in the oil reservoir unit 4 by the amount of oil P required to transmit the heat between the temperature sensor 30 and the rotor 1, that is, so that a space between a lower portion of the oil reservoir unit 4 of the rotor 1 and a lower portion (temperature detection portion 36) of the temperature sensor 30 is filled with the oil P.

As illustrated in FIG. 2(c), when the motor 100 is driven, the oil P in the oil reservoir unit 4 is thrust outside of the oil reservoir unit 4 in the radial direction by its centrifugal force, and a (heat transmission) layer of the oil P is formed on the inner peripheral surface of the oil reservoir unit 4. In order to detect the temperature of the rotor 1 by the temperature sensor 30 with high precision in the above drive state of the motor 100, as illustrated in FIG. 2(d), there is a need to reserve the oil P by the amount as large as the space between the rotor 1 and the temperature sensor 30 is filled with the layer of the oil P, that is, by the amount of π (D²-d²)L1/4 or more. In this expression, D is an inner diameter of the oil reservoir unit 4, d is an outer diameter of the temperature sensor 30, and L1 is a length of the oil reservoir unit 4 in the rotating shaft line L. When the rotating speed of the rotor 1 is relatively low in the drive state of the motor 100, because the oil P in the oil reservoir unit 4 pools on the lower portion, the amount of oil P reserved in the oil reservoir unit 4 can be reduced.

As described above, the oil P is thrust outside in the radial direction at the time of driving the motor 100. Therefore, even in this case, in order to measure the temperature of the oil P by the temperature detection portion 36 of the temperature sensor 30 with a high response and elaboration, as illustrated in FIG. 2, it is preferable that the temperature detection portion 36 is fitted to the outside in the radial direction with respect to the rotating shaft line L of the rotor 1, that is, on the inner peripheral surface of the cylindrical portion 31 of the temperature sensor 30.

In the above first embodiment, the temperature detection portion 36 of the temperature sensor 30 is fitted to particularly the lower side of the inner peripheral surface of the cylindrical portion 31. With the above configuration, even when the motor 100 is arranged so that the rotating shaft line L of the rotor 1 becomes horizontal, and in the stop state of the motor 100 as illustrated in FIG. 2 (a), the heat is always transmitted between the inner peripheral surface of a portion to which the temperature detection portion 36 is fitted, and the rotor 1 through the oil P, and the temperature of the oil P can be measured by the temperature detection portion 36 with the high response. Also, even when the rotating speed of the rotor 1 is low, because the oil P within the oil reservoir unit 4 mainly pools in a vertically lower portion, it is preferable that the temperature detection portion 36 is fitted to the lower side of the inner peripheral surface of the cylindrical portion 31 of the temperature sensor 30. That is, the temperature detection portion 36 is fitted to the vertically lower side of the inner peripheral surface of the cylindrical portion 31 of the temperature sensor 30 as in the first embodiment. As a result, the heat of the rotor 1 can be efficiently transmitted to the temperature detection portion 36 regardless of the rotating speed of the rotor 1, and the heat transmission characteristic from the rotor 1 can be stabilized.

When the rotating shaft line L of the rotor 1 becomes vertical, that is, the motor cover 20 is arranged on a vertically upper portion, the oil P pools at the end of the oil reservoir unit 4 opposite to the motor cover 20 side at the time of stopping the motor 100. For that reason, in order to transmit the heat between the rotor 1 and the temperature sensor 30, there is a need to reserve the oil P within the oil reservoir unit 4 by the amount of πD² (L1-L2) /4 or more. In this expression, L2 is a length of the temperature sensor 30 in the oil reservoir unit 4 in the rotating shaft line L direction. On the other hand, when the rotor 1 rotates at a relatively high speed, as in FIG. 2 (c) and (d), the oil P is thrust outside in the radial direction of the oil reservoir unit, it is preferable to reserve the oil P by the amount of π(D²-d²)L1/4 or more. Also, when the motor cover 20 is arranged on the vertically upper portion as described, in order to measure the temperature of the oil P with a high response, particularly at the time of stopping the motor 100, the temperature detection portion 36 can be disposed on the inner surface of the bottom portion 32 of the temperature sensor 30.

Also, when the overall oil reservoir unit 4 is filled with the oil P, a contact area of the temperature detection unit 30 and the oil P can increase, and the oil P temperature can be more efficiently measured by the temperature detection portion 36. Also, when the overall oil reservoir unit 4 is filled with the oil P, even if the rotating shaft line L of the rotor 1 is arranged to be horizontal or vertical, the temperature of the oil P can be measured with high precision regardless of the mounting position of the temperature detection portion 36 and the rotating speed of the rotor 1.

Thus, in the first embodiment, in measuring the temperature of the oil to which the heat is transmitted from the rotor 1 by the temperature detection portion 36, when the temperature of the oil P reserved in the oil reservoir unit 4 is measured, the temperature of the oil P can be measured without taking the influence of the inflow temperature, the flow rate, and the flow velocity of the oil P into account. On the basis of the measurement result, the temperature of the rotor 1 can be detected with high precision. In detecting the temperature of the rotor 1, calibration information on the temperature of the oil P and the temperature of the rotor 1 which are obtained in advance may be used. Also, the temperature of the magnet 9 which is embedded in the rotor 1 whose temperature can generally become higher than those temperatures can be calculated with high precision by using the temperature calculation unit 27 on the basis of the drive state (rotor rotating speed and torque) of the motor, an energy loss (iron loss) corresponding to the drive state, a heat resistance and a heat capacity of the rotor 1 which are obtained in advance. The rotation of the rotor 1 can be controlled with elaboration by the rotation control unit 26 on the basis of those calculated temperatures so that the rotor temperature and the magnet temperature do not exceed the limit temperature. As a result, the higher efficiency and the higher torque of the motor 100 can be realized.

### [Second Embodiment]

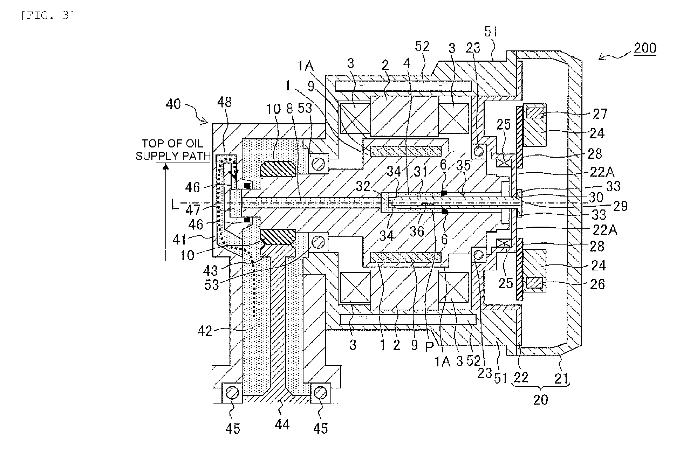

Subsequently, a description will be given in detail of a motor according to a second embodiment of the present invention with reference to FIG. 3. In the figure, the same configurations as those in the first embodiment are denoted by identical symbols, and their detailed description will be omitted.

A motor 200 according to the second embodiment is different from that of the first embodiment in that the rotor 1 provides an oil supply path 8 extending from a bottom of the oil reservoir unit 4 to the end of the rotor 1 at the reducer 40 side along the rotating shaft line L. Also, the housing 41 forms an oil supply path 48, and the oil supply path 48 communicates between an oil pool 47 demarcated by the end of the rotor 1 and the housing 41, and the oil storage chamber 42 so that the oil within the oil storage chamber 42 can flow into the oil supply path 8 through the oil pool 47. An oil seal 46 is provided between the rotor 1 and the housing 41 so that the oil in the oil pool 47 is not leaked into the oil storage chamber 42.

In the second embodiment, unlike the first embodiment, when the motor cover 20 is fitted to the motor case 51, there is no need to pour the oil P into the oil reservoir unit 4 in advance. That is, when the motor cover 20 is fitted to the motor case 51, a part of the temperature sensor 30 is inserted into the oil reservoir unit 4 in a state where the oil P is not reserved in the oil reservoir unit 4. Then, after the motor cover 20 and the reducer 40 are fitted to the motor case 20, the coil 3 of the motor 200 is energized to rotate the rotor 1 at a desired rotating speed, and rotate the shaft 44 of the reducer 40. As a result, the oil P reserved in the oil storage chamber 42 of the housing 41 is diffused to and flows into the oil supply path 48. The oil P that has flowed into the oil supply path 48 is supplied to the oil supply path 8 of the rotor 1 through the oil pool 47. Further, the oil P is supplied to the oil reservoir unit 4 that fluidically communicates with the oil supply path 8. For example, an on-off valve (not shown) is provided in the oil supply path 48, and after the oil P of a desired amount is reserved in the oil reservoir unit 4, the on-off valve may be closed to stop the supply of the oil. Also, a height of a top of the oil supply path 48 formed in the housing 41 in the vertical direction is set to be relatively higher than a height of the oil reservoir unit 4 in the vertical direction, thereby being capable of surely supplying the oil P to the oil reservoir unit 4 of the rotor 1. Also, in the second embodiment, even if the oil P in the oil reservoir unit 4 is leaked from the oil seal 6, the oil reservoir unit 4 is replenished with the oil P through the oil supply path 8 so that the oil P of a desired amount can be reserved in the oil reservoir unit 4. When the oil P of a given amount or more is reserved in the oil reservoir unit 4, an oil pressure in the oil supply path 8 is adjusted so that the oil P can be discharged from the oil reservoir unit 4 to the oil supply path 8.

### [Third Embodiment]

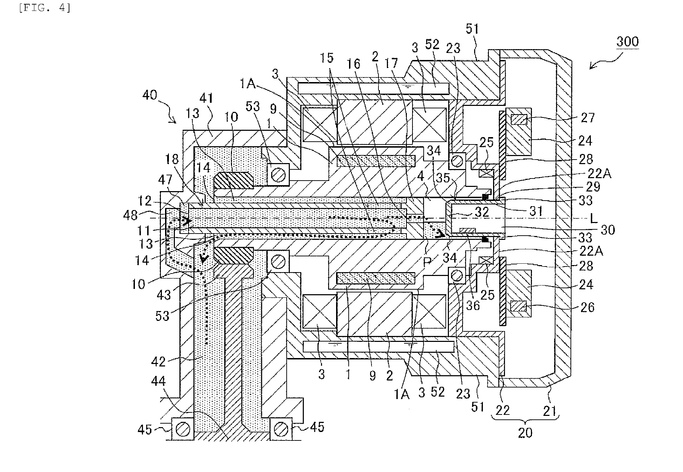

Subsequently, a description will be given in detail of a motor according to a third embodiment of the present invention with reference to FIG. 4. In the figure, the same configurations as those in the first and second embodiments are denoted by identical symbols, and their detailed description will be omitted.

A motor 300 according to the third embodiment is different from the motor 200 of the second embodiment in that the oil supply path 8 includes an oil inflow path 11 and an oil outflow path 13, and also different from the motor 100 of the first embodiment in that there is provided an oil circulation path 18 mainly including the oil inflow path 11 and the oil outflow path 13 in the interior of the rotor 1, and the oil storage chamber 42 and the oil supply path 48 within the housing 41. The oil P high in thermal conductivity reserved in the oil storage chamber 42 is circulated in the interior of the oil circulation path 18 so that the heat radiation from the rotor 1 can be sucked to cool the rotor 1. As the lengths of the oil reservoir unit 4 and the temperature sensor 30 in the direction of the rotating shaft line L are longer, the temperature of the rotor 1 can be detected with higher precision. In the motor 300 according to the third embodiment, in order to ensure the oil circulation path 18, the lengths of the oil reservoir unit 4 and the temperature sensor 30 in the direction of the rotating shaft line L are relatively short as compared with those in the first and second embodiments.

The above oil circulation path 18 will be described in detail. First, when the coil 3 of the motor 300 is energized to rotate the rotor 1 and the shaft 44, the oil reserved within the oil storage chamber 42 is diffused to and flows in the oil supply path 48. Thereafter, the oil passes through the oil pool 47, and flows into the oil inflow path 11 through an inflow port 12 formed in the end of the rotor 1. The oil within the oil inflow path 11 mainly flows in the direction of the rotating shaft line L of the rotor 1, passes through a coupling path 15 in the radial direction which is provided in the vicinity of the opposite end of the oil inflow path 11, and flows outside of the oil inflow path 11 in the radial direction. The oil outflow path 13 fluidically communicated with the coupling path 15 is disposed outside of the oil inflow path 11 in the radial direction. The oil that has flowed into the coupling path 15 flows in the interior of the oil outflow path 13 in the rotating shaft line L direction (direction opposite to the inflow direction) of the rotor 1. Then, the oil is discharged into the oil storage chamber 42 through an outflow port 14 formed in the end of the oil outflow path 13. The oil circulation path 18 of the oil P for rotor cooling is thus formed. The oil circulation path 18 absorbs the heat of the rotor 1 while the oil P is passing through the oil inflow path 11, the oil outflow path 13, and the coupling path 15, and the heat radiated from the rotor 1 is radiated to the external of the motor 300. As illustrated in the figure, since the oil outflow path 13 is disposed outside of the oil inflow path 11 in the radial direction, the heat radiated from the rotor 1 is mainly absorbed by the oil within the oil outflow path 13, and the oil can be rapidly discharged to the outside of the rotor 1. As a result, the rotor 1 can be efficiently cooled.

The oil inflow path 11 and the oil outflow path 13 in the oil circulation path 18 is isolated from the oil reservoir unit 4 by a partition 17. However, a continuous hole 16 is pierced substantially in the center (on the rotating shaft line L of the rotor 1) of the partition 17, and the oil inflow path 11 and the oil reservoir unit 4 fluidically communicate with each other through the continuous hole 16. With the provision of the continuous hole 16, a part of the oil P flowing in the oil inflow path 11 can be supplied to the oil reservoir unit 4 through the continuous hole 16, and the oil P in the oil reservoir unit 4 can be discharged to the oil inflow path 11 through the continuous hole 16.

Since a part of the oil P flowing in the oil circulation path 18 is thus supplied to the oil reservoir unit 4 through the continuous hole 16, there is no need to pour the oil P into the oil reservoir unit 4 in advance in the third embodiment, as in the second embodiment. That is, in an initial stage where the oil P is circuited in the oil circulation path 18, the coil 3 of the motor 300 is energized to rotate the rotor 1 at a desired rotating speed so that the oil P in the oil storage chamber 42 can be supplied to the oil reservoir unit 4. In order to efficiently supply the oil P to the oil reservoir unit 4, a spiral groove (not shown) may be formed in a part of the oil inflow path 11 or the inner peripheral surface of the continuous hole 16 in advance, and the oil P may be guided to the oil reservoir unit 4. Also, an on-off valve (not shown) may be provided in the oil outflow path 13 or the coupling path 15, and the on-off valve may be closed to close the oil outflow path 13 or the coupling path 15 until the oil P of a desired amount is reserved in the oil reservoir unit 4, and thereafter the on-off valve may be opened to circulate the oil P in the oil circulation path 18. Also, in the third embodiment, as in the second embodiment, even if the oil P in the oil reservoir unit 4 is leaked from the oil seal 6, the oil reservoir unit 4 can be replenished with a part of the oil that circulates in the oil circulation path 18 through the continuous hole 16. As a result, the oil P of a desired amount can be reserved in the oil reservoir unit 4.

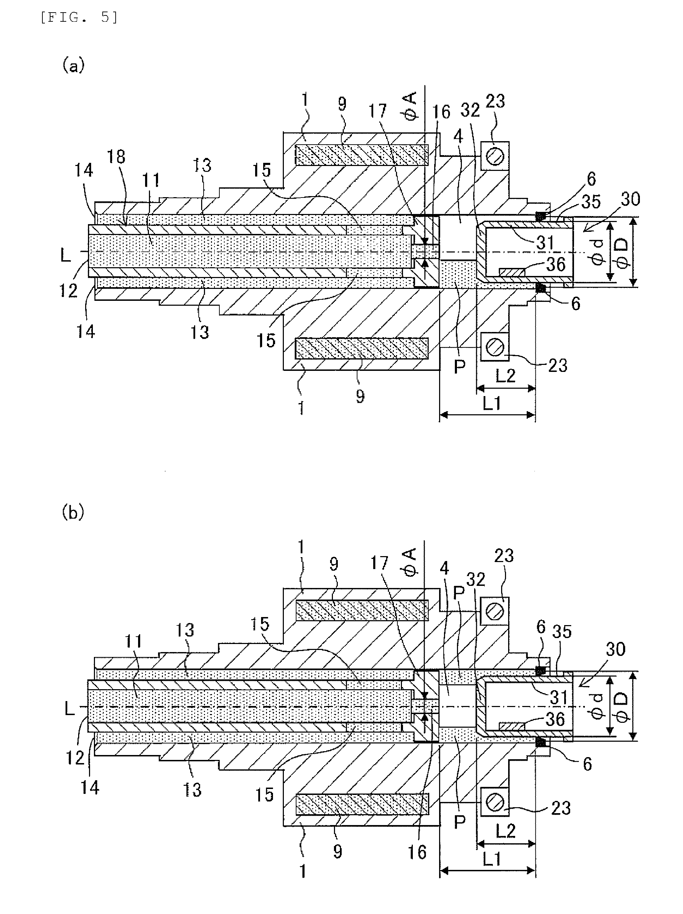

FIG. 5 illustrates a relationship between the oil P poured into the oil reservoir unit 4 and the temperature sensor 30 according to the third embodiment. FIG. 5(a) illustrates the motor stop state, and FIG. 5(b) illustrates the motor drive state.

As illustrated in FIG. 5(a), when the motor 300 is arranged in the vehicle so that the rotating shaft line L of the rotor 1 becomes horizontal, in the stop state of the motor 300, the oil P pools in the lower side of the oil reservoir unit 4. In the third embodiment, with the provision of the continuous hole 16, if the oil P is supplied to the oil reservoir unit 4 by an amount larger than a given amount, and reserved at a position higher than a height of the continuous hole 16, unnecessary oil P which is reserved at the position higher than the continuous hole 16 can be discharged to the oil inflow path 11 through the continuous hole 16. Thus, in the third embodiment, a height of the oil P reserved in the oil reservoir unit 4 can be limited to be lower than that of the continuous hole 16 to optimize the amount of oil P in the oil reservoir unit 4. In order to reserve the oil P of the amount as large as possible within the oil reservoir unit 4, and transmit the heat between the rotor 1 and the temperature sensor 30 through the oil P, for example, at the time of driving the motor 300, it is preferable to decrease an inner diameter A of the continuous hole 16 as much as possible. The pressure of the oil flowing in the oil inflow path 11 is adjusted so that the oil P in the oil reservoir unit 4 can be reserved up to a position higher than that of continuous hole 16.

As in the third embodiment, when the continuous hole 16 is formed between the oil reservoir unit 4 and the oil inflow path 11, if the motor 300 is arranged in the vehicle so that the rotating shaft line L becomes vertical, that is, the motor cover 20 is disposed at the vertically upper portion, there is a possibility that the oil P reserved on the end (vertically lower portion) of the oil reservoir unit 4 opposite to the motor cover 20 side is discharged to the oil inflow path 11 through the continuous hole 16. For that reason, in the third embodiment, it is preferable that the motor 300 is arranged in the vehicle so that the rotating shaft line L of the rotor 1 becomes horizontal. If the motor 300 is arranged so that the rotating shaft line L of the rotor 1 becomes vertical, the oil pressure in the oil inflow path 11 is adjusted, for example, a one-way valve may be provided in the continuous hole 16 so as to suppress the discharge of the oil P to the oil inflow path 11.

As illustrated in FIG. 5(b), when the motor 300 is driven, the oil P in the oil reservoir unit 4 is thrust outside of the oil reservoir unit 4 in the radial direction by its centrifugal force, and a layer of the oil P is formed on the inner peripheral surface of the oil reservoir unit 4. Even in this state, in order to detect the temperature of the rotor 1 by the temperature sensor 30 with high precision, as in the first embodiment, there is a need to reserve the oil P in the oil reservoir unit 4 by the amount of π(D²-d²)L1/4 or more.

Thus, in the third embodiment, a part of the oil P that circulates for cooling the rotor 1 is reserved in the oil reservoir unit 4, and the temperature of the rotor 1 can be detected through the reserved oil P. As a result, the influence attributable to the circulation state such as the inflow temperature, the flow rate, or the flow velocity of the circulating oil P can be suppressed to detect the temperature of the rotor 1 with high precision. Also, because the oil P can be reserved in the oil reservoir unit 4 with the use of the circulating oil P, a process of pouring the oil P into the oil reservoir unit 4 from the external in advance becomes unnecessary, and the manufacturing process of the motor can be simplified.

### [Fourth Embodiment]

Subsequently, a description will be given in detail of a motor according to a fourth embodiment of the present invention with reference to FIG. 4. In the figure, the same configurations as those in the first to third embodiments are denoted by identical symbols, and their detailed description will be omitted.

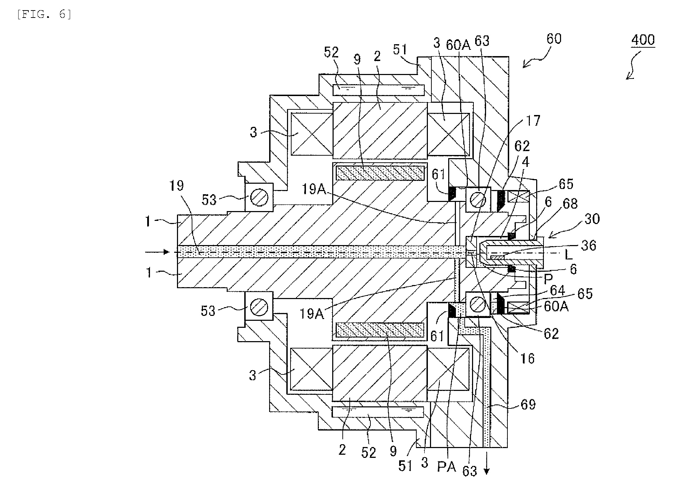

FIG. 6 illustrates an embodiment when a lubricating oil high in the thermal conductivity for cooling the bearing is used as the oil P which is reserved in the oil reservoir unit 4.

The above lubricating oil P flows in an oil supply path 19 provided along the rotating shaft line L of the rotor 1 from one end of the rotor 1, passes through an oil discharge path 19A disposed in the vicinity of the end of the oil reservoir unit 4 side and extending in the radial direction, and is transmitted to an oil storage unit 64 demarcated by an inner surface 60A of a motor cover 60, the rotor 1, and oil seals 61, 62. A bearing 63 fitted to the inner surface 60A of the motor cover 60 is accommodated in the oil storage unit 64, and the bearing 63 is cooled by an oil PA within the oil storage unit 64. Also, the oil PA that absorbs the heat of the bearing 63 and reaches a high temperature passes through an oil discharge path 69 formed in the interior of the motor cover 60, and is discharged to the external of a motor 400. The lubricating oil is supplied from an oil storage chamber for the lubricating oil not shown to the oil supply path 19.

As in the first embodiment, a rotating angle sensor 65 is fitted to the inner surface 60A of the motor cover 60, and connected to rotation control means not shown so as to control the rotating speed of the rotor 1. Also, an opening portion 68 is formed substantially in the center (on the rotating shaft line L of the rotor 1) of the motor cover 60, and the temperature sensor 30 is attached to pass through the opening portion 68.

In this example, the partition 17 is disposed between the oil supply path 19 and the oil reservoir unit 4 as in the third embodiment, and the continuous hole 16 is formed substantially in the center of the partition 17 so that a part of the oil P flowing in the oil supply path 19 is supplied to the oil reservoir unit 4.

In the fourth embodiment, as in the third embodiment, when the motor cover 60 is fitted to the motor case 51, there is no need to pour the oil P into the oil reservoir unit 4 in advance. That is, after the motor cover 60 is fitted to the motor case 51, the rotor 1 is rotated at a desired rotating speed so that a part of the oil P flowing in the oil supply path 19 can be supplied to the oil reservoir unit 4 through the continuous hole 16.

The four embodiments of the present invention have been described above. However, the present invention is not limited to the above embodiments, but can be variously modified in design without departing from the spirit of the invention disclosed in the claims.

As understandable from the above description, according to the first to fourth embodiments, the rotor temperature can be detected through the oil which is reserved in the oil reservoir unit. That is, because there is no need to consider the influence of the inflow temperature, the flow rate, and the flow velocity of the oil in measuring the oil temperature reserved in the oil reservoir unit, the rotor temperature can be detected with easy and high precision on the basis of the above measurement result. Further, when the magnet is embedded within the rotor, because the magnet temperature can be calculated with high precision on the basis of the detected rotor temperature, the rotating speed of the rotor can be controlled to suppress the demagnetization of the magnet. As a result, the motor can be driven with a high torque and a high efficiency for a long duration.

The present invention is not limited to the above first to fourth embodiments, but includes a variety of modified examples. For example, the above first to fourth embodiments are described in detail for facilitation to understand the present invention, and the present invention does not always provide all of the configurations described above. Also, a part of one configuration example can be replaced with another configuration example, and the configuration of one embodiment can be added with the configuration of another embodiment. Also, in a part of the respective first to fourth embodiments, another configuration can be added, deleted, or replaced.

Also, control lines and information lines necessary for description are illustrated, and all of the control lines and the information lines necessary for products are not illustrated. In fact, it may be conceivable that most of the configurations are connected to each other.

## Claims

1. A motor comprising: a rotor, a stator arranged around the rotor, and a temperature sensor,
wherein the rotor includes an oil reservoir unit that reserves an oil on a rotating shaft line in an interior thereof, and
wherein the temperature sensor detects a temperature of the oil reserved in the oil reservoir unit.

2. The motor according to claim 1,
wherein the temperature sensor has one end fitted to a motor cover of the motor, and the other end inserted into the oil reservoir unit on the rotating shaft line of the rotor, and contacting with the oil.

3. The motor according to claim 1 or 2,
wherein the temperature sensor includes a housing having a cylindrical portion and a bottom portion, and a temperature detection unit arranged on an inner peripheral surface of the cylindrical portion.

4. The motor according to claim 2 or 3,
wherein an oil seal that prevents the oil reserved in the oil reservoir unit from being leaked out of the rotor is arranged between the temperature sensor and the rotor.

5. The motor according to claim 3,
wherein the temperature detection unit is arranged on the inner peripheral surface of the cylindrical portion on a lower side of the motor.

6. The motor according to any one of claims 1 to 5,
wherein the motor includes an oil storage chamber, the rotor includes an oil supply path on the rotating shaft line in an interior thereof, and the oil storage chamber and the oil reservoir unit communicate with each other through the oil supply path.

7. The motor according to claim 6,
wherein the oil supply path includes an oil circulation path having at least an oil inflow path and an oil outflow path.

8. The motor according to claim 7,
wherein the rotor includes a continuous hole that communicates between the oil circulation path and the oil reservoir unit, and the continuous hole is pierced in the rotating shaft line.

9. The motor according to any one of claims 1 to 8,
wherein the motor includes a temperature calculation unit for calculating a rotor temperature and/or a temperature of a magnet embedded in the rotor according to an oil temperature detected by the temperature detection sensor.
